# EUROPEAN PATENT SPECIFICATION

(11) **EP 0 926 948 B1**
(45) Date of publication and mention of the grant of the patent: **30.10.2002**
(21) Application number: 97935998.1
(22) Date of filing: 27.08.1997
(51) Int. Cl.: A01K 73/02, A01K 75/00

(54) **METHOD AND DEVICE FOR USE ON TRAWLERS**
VERFAHREN UND VORRICHTUNG ZUR VERWENDUNG AUF GRUNDSCHLEPPNETZFISCHERN
PROCEDE ET DISPOSITIF D'UTILISATION SUR DES CHALUTIERS

(30) Priority: 04.09.1996 SE 9603239
(43) Date of publication of application: 07.07.1999
(73) Proprietor: Swetech ab, 691 80 Karlskoga (SE)
(72) Inventor: KARLSSON, Staffan, S-691 53 Karlskoga (SE); KARLSSON, Ulf, S-691 52 Karlskoga (SE)
(74) Representative: Falk, Bengt
(86) International application number: SE9701411
(87) International publication number: WO98009511

(56) References cited:
- US-A- 3 299 559

## Description

The present invention relates to a method and a device for use on engine-powered trawlers to prevent a trawl which is overloaded or caught on the sea-bottom causing the loss of the trawler.

As the sorts of fish which are usually caught by trawling usually move in large shoals near the sea-bottom, there is always a risk that the trawl catches on an obstacle on the sea-bottom such as a wreck. Should this happen in severe weather, the result can be that the trawl simply drags the trawler down into the sea and such accidents do unfortunately occur. The only possibility of preventing such an accident is that one of the crew is in the right place at the critical moment and notices the danger and manages to release the trawl before it is too late. In the cold waters of northern latitudes and in bad weather conditions, it is almost impossible to always have a man on 'stand-by' at the trawl winch to prevent such an eventuality. Furthermore, it is usually the man on the bridge who first notices that the trawl is caught on the sea-bottom and that there is an immediate risk for the safety of the entire vessel. In heavy seas, it is also difficult to release the trawl sufficiently quickly when such an event does take place.

Another conceivable near-accident which relates to the present invention, is the case where there is a risk that an overloaded trawl can overturn the boat when being taken on board.

The present invention is intended to offer a solution to these safety risks in the form of a method and a device for the immediate, remote-controlled, release of the trawl from the vessel should there be any risk of the near-accidents described above, in such a manner as to save the trawler without losing the trawl and the catch.

At present, the trawl is usually operated using winches located on the aft deck of the trawler. While trawling is taking place, however, the load on the winches is relieved by means of a so-called 'halter' which consists of a steel wire the ends of which are secured on either side at the aft of the vessel, and which is stretched out in the form of a bow behind the trawler. The trawl cables are fixed to each other and to the halter at the halter centre point. During trawling, it is therefore the halter which takes up all the forces exerted on the trawl and for this reason, the winches can stand in neutral position. The trawl cables are secured to the halter by means of a special locking device which usually consists of a chain which is attached in a certain manner. A characteristic of this chain lock is that the steel wire of the halter is an important component and if this wire runs out of the lock, the trawl is released from being directly towed by the trawler as it is the halter which carries out this function while the trawl winches stand in neutral position.

As the halter is secured to or is immediately adjacent to the stern of the trawler, an overloaded trawl represents a very great load on the trawler. Trawlers which are built to take on the trawl and catch over the stern rail are subjected to even greater loads and are therefore fitted with built-up aft loading supports to which the halter is secured. Stresses resulting from an overloaded trawl are extra large in the case of trawlers of this type as the stresses are exerted at a higher point on the vessel. This type of trawler, however, is advantageous regarding such operations as taking on board the trawl with its catch that operators do not wish to stop using this type of trawler and, in fact, such vessels will probably be even more common in the future.

The present invention now offers a solution to the safety problems discussed above by proposing a method and a device for use on engine-powered trawlers to prevent trawls which are overloaded or caught on the sea-bottom resulting in the loss of the trawler.

In accordance with the present invention, this is achieved when the trawl is caught on the sea-bottom by cutting the halter which relieves the load on the trawler's winches during trawling by means of a remote-controlled, propellant-operated, specially designed cutting device which cuts near at least one of the halter attachment points or close to the stern of the trawler.

The said cutting device is designed for this purpose to provide an immediate and clean cut at right angles through the steel wire halter.

As the halter is cut at the same time as the trawl is heavily loaded, the halter wire runs out of the above-mentioned locking device upon which the device is immediately released and the trawl cables are freed to run out from the trawl winches which are in neutral position, and the immediate danger to the trawler is thereby eliminated and also the trawl is held closed which means that the catch is not lost as the trawler can easily turn and recover it.

In certain cases, it can also be necessary to cut one or both of the trawl cables in a similar manner. The tool used for this purpose is of the same design.

In order to carry out the above-described tasks it is necessary for the cutting tool used to provide a very rapid and in all cases, complete cutting of the steel wire which constitutes the halter, that the cutting operation does not result in fragments which could represent danger to people in the vicinity being cast out, that the operation is not experienced as disturbing by those in the vicinity and finally, that the cutting operation in all cases and even following a long period in the corrosive sea environment always functions when it is really necessary.

In order to fulfil these stringent requirements, the cutting device in accordance with the said invention, has therefore been designed with a first longitudinal guide bushing which clasps the steel wire which constitutes the halter on both sides and which preferably at a right angle to the first guide bushing at the desired cutting point has a second guide bushing in which the actual propellant-operated cutting tool is located in order to reach the halter steel wire through the opening for this purpose. The second guide bushing with the adjustable cutting tool inside can be made completely sealed at manufacture while the parts of the first guide bushing which are not directly affected by the halter steel wire can easily be filled with grease or sealant.

The said invention is defined in more detail in the patent claims below and a further description is now given in combination with the attached figures.

The figures illustrate the following:
- Fig 1: a schematic arrangement during trawling while
- Fig 2: shows a cross-section side view of an example of the device in accordance with the said invention
- Fig 3: section III-III in Fig 2 and
- Fig 4: a side projection of the actual device and

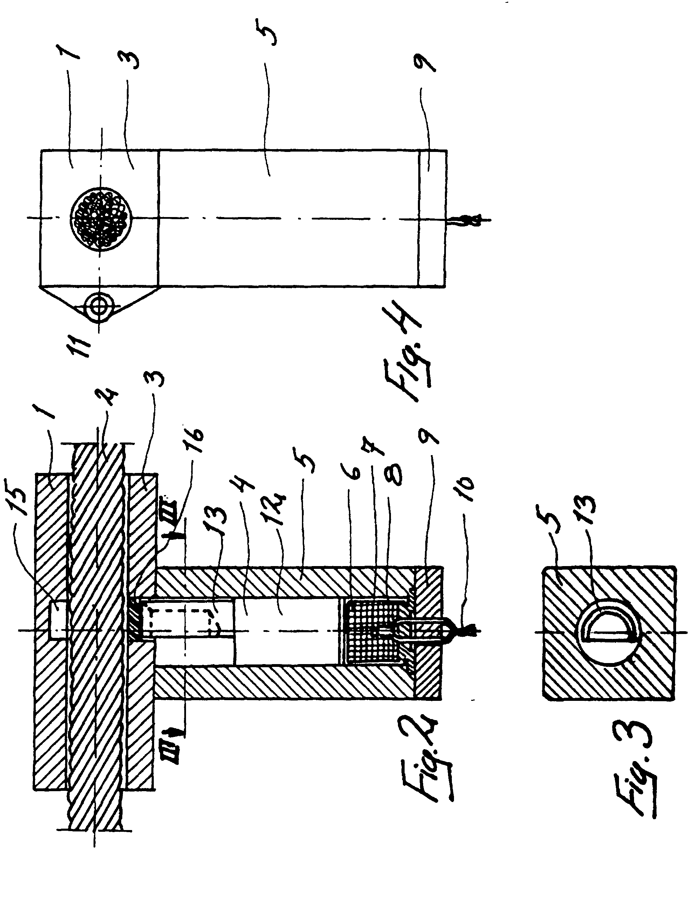

- Fig 5 and 6: the actual cutting device or surface in two projections.

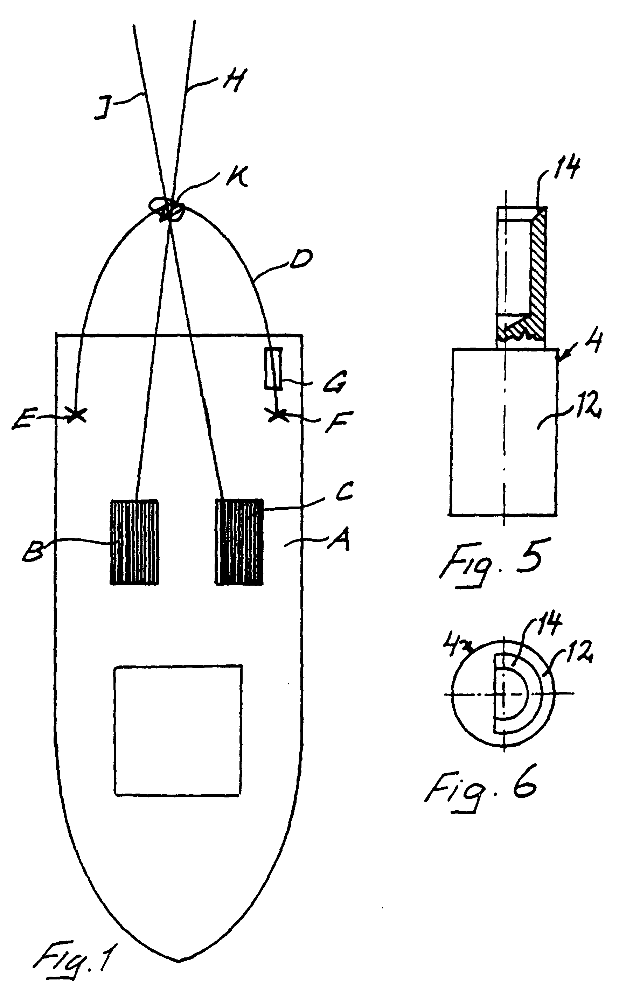

In the general layout during trawling shown in Fig 1, the trawler has the designation A, the two trawl winches B and C while the halter D has attachment points E and F and the wire cutting device G, which is characteristic of the invention is located close to attachment point F. Finally, the figure shows trawl cables H and J, and locking device K between halter D and trawl cables H and J.

When the wire cutting device G is released, the halter D runs out of the locking device K and the trawl is freed from the halter which enables the trawl cables to begin to run out of the released winches B and C. The trawl, however, is still held together by locking device K.

The more detailed view of the device in Figures 2-4 shows that the first guide bushing consists of an upper section 1 and a lower section 3. These are connected by means of a hinge 11. The steel wire halter 2 runs through this first guide bushing. The surplus space inside the guide bushing at the side of the steel wire can be filled with grease or sealant and the opening 15 through which the cutting device or axe 4 reaches the steel wire 2 can be sealed with a plastic plug 16.

The second guide bushing 5 with its extreme end connected to a base plate 9, is firmly secured to the first guide bushing. The cutting device or axe 4 is adjustably attached inside the second guide bushing. The cutting device consists of a piston section 12 and a front cutting section 13 which has a finely sharpened bow-formed cutting edge 14. An opening 15 which is formed to accommodate the cutting edge and act as counter support and shearing edge is made for the cutting edge 14 passage in the first guide bushing and through the halter 2. As the cutting edge 14 is of bow form but does not form a complete circle, and because the opening 15 is designed in accordance with this, a guide is automatically formed which ensures that the edge is always at right angles to the halter.

Fig 2 also shows the propellant charge 8 with its container 6, igniter 7 and igniter cable 10.

## Claims

1. Method to be used when carrying out trawling from an engine-powered trawler in order to prevent the trawler being dragged down into the sea by a trawl which is overloaded or which has caught on an obstacle on the sea-bottom **wherein** the trawl is released by cutting by means of an propellant-operated, remote-controlled, totally encapsulated cutting device (G, 1-16) of at least one steel wire which joins the trawl to the trawler without causing the trawl to open.

2. A method as claimed in Claim 1 to be used when trawling using an engine-powered trawler (A) to prevent a trawl which has become caught in an obstacle on the sea-bottom causing the trawler to be dragged down under the water **wherein** a wire halter (D) the ends of which (E, F) are secured to each side of the trawler (A) stern and which during trawling operations relieves the trawl winches (B, C) used for operating the trawl and which during this operation are set in neutral as the outgoing trawl cables (J, H) from the winches (B, C) towards the trawl are secured to the halter (D) by means of a lock (K) which in the event that the halter (D) single attachment point (E or F) should rupture and the halter run out the trawl is immediately released from the trawler by means of an propellant-operated, totally encapsulated cutting device (G 1-15) preferably initiated from the trawler bridge, the cutting device being activated at one attachment point (E or F) of the halter (D) so that the halter (D) is cut at the stated attachment point (E or F) and so that the halter (D) can immediately run out of the said locking device (K).

3. A device to be used when trawling using an engine-powered trawler according to the method as claimed in Claims 1 and 2 in order to prevent a trawl which is overloaded or which has suddenly caught on an obstacle on the sea-bottom resulting in the loss of the trawler (A) due to being dragged down under the sea by the trawl by means of cutting the wire which joins the trawl to the trawler using a device initiated preferably from the trawler bridge **wherein** the said device incorporates a first guide bushing (1, 3) which encloses the location on the steel wire (2) where cutting is to be carried out together with the parts of the wire immediately adjacent and, at right angles to the first guide bushing (1, 3), a second guide bushing (5) in which an propellant-operated cutting tool (4) is adjustably located and which has a cutting edge (14) designed for this purpose which has access to the steel wire (2) which is to be cut via an opening (15) in the first guide bushing (1, 3) at which the edges of the opening function as counter support and shearing edge for the cutting tool edge (14), the cutting tool being designed with a remote-controlled propellant charge (8) positioned behind the said cutting tool.

4. A device as claimed in Claim 3 which is designed to cut a wire (D), a so-called halter, which during trawling relieves the load on the trawl winches (B, C) which are usually set in neutral while trawling is being carried out, by means of two trawl cables (H, J) from the winches being secured to the halter (D) by a locking device (K) in which the halter is incorporated and which is immediately released if the halter (D) runs out of the locking device as a result of being cut.

5. Device as claimed in Claim 4 **wherein** a cutting device has a bow-formed and finely sharpened cutting edge (14) at right angles to the halter steel-wire while the opening (15) in the first guide bushing is so designed that the cutting edge (14) can cut through the entire wire with a good margin.

6. Device as claimed in Claims 3-5 **wherein** the cutting tool between the cutting edge (14) and the propellant charge (8) has a piston section (12) which has a greater diameter than the cutting edge and where the cutting edge (14) is of bow form but does not form a complete circle, and where the opening (15) for the cutting edge in the first guide bushing (1, 3) is designed in order to guarantee that the cutting tool does not twist thus ensuring that the cutting edge (14) is always at right angles to the steel wire (2) of the halter.

7. Device as claimed in Claims 3-6 **wherein** the first guide bushing (1, 3) can be opened by means of a hinge (11) so that it can easily be hooked over the halter steel wire (2) upon which the guide bushing parts can be locked together with the wire (2) between them.

## Patentansprüche

1. Verfahren zur Verwendung beim Schleppnetzfischen von einem motorgetriebenen Trawler, um zu verhindern, daß der Trawler durch ein Schleppnetz, das überladen ist oder sich sich in einem Hindernis am Meeresgrund verfangen hat, unter Wasser gezogen wird, wobei das Schleppnetz freigegeben wird durch Abschneiden mindestens eines das Schleppnetz mit dem Trawler verbindenden Stahlkabels mittels einer Treibmittel-betätigten, ferngesteuerten, vollständig eingekapselten Schneidvorrichtung (G, 1-16), ohne daß dies zum Öffnen des Schleppnetzes führt.

2. Verfahren nach Anspruch 1,
zur Verwendung beim Schleppnetzfischen mittels eines motorgetriebenen Trawlers (A), um zu verhindern, daß ein Schleppnetz, das sich in einem Hindernis am Meeresboden verfangen hat, den Trawler unter Wasser zieht, wobei ein Kabelzaum (D), dessen Enden (E, F) an beiden Seiten des Hecks des Trawlers (A) befestigt sind und welcher während des Schleppnetzfischens die Schleppnetzwinden (B, C) entlastet, die zum Betätigen des Schleppnetzes dienen und die während dieses Betriebs in neutrale Stellung gebracht werden, wobei die auslaufenden Schleppnetzkabel (J, H) von den Winden (B, C) zum Schleppnetz an dem Zaum (D) mittels einer Schließe (K) befestigt sind, wobei, wenn ein einzelner Befestigungspunkt (E, F) des Zaums (D) brechen und der Zaum nachgeben sollte, das Schleppnetz sofort von dem Trawler gelöst wird mittels einer Treibmittelbetätigten, vollständig eingekapselten Schneidvorrichtung (G, 1-15), die vorzugsweise von der Brücke des Trawlers ausgelöst wird, wobei die Schneideinrichtung aktiviert wird an einem Befestigungspunkt (E oder F) des Zaums (D), so daß der Zaum (D) an diesem Befestigungspunkt (E oder F) durchgeschnitten wird, und so, daß der Zaum (D) sofort aus der Schließe (K) auslaufen kann.

3. Vorrichtung zur Verwendung beim Schleppnetzfischen mittels eines motorgetriebenen Trawlers nach dem Verfahren nach Anspruch 1 und 2, um zu verhindern, daß ein Schleppnetz, das überladen ist oder sich plötzlich in einem Hindernis am Meeresgrund verfangen hat, zum Verlust des Trawlers (A) führt dadurch, daß dieser von dem Schleppnetz unter Wasser gezogen wird durch Durchschneiden des das Schleppnetz mit dem Trawler verbindenden Kabels mittels einer vorzugsweise von der Brücke des Trawlers ausgelösten Vorrichtung, wobei diese Vorrichtung eine erste Führungshülse (1, 3) aufweist, die die Stelle des Stahlkabels (2), wo das Schneiden durchgeführt werden soll, zusammen mit den unmittelbar angrenzenden Teilen des Kabels umschließt, sowie rechtwinklig zu der ersten Führungshülse (1, 3) eine zweite Führungshülse (5), in der ein Treibmittel-betätigtes Schneidwerkzeug (4) einstellbar angeordnet ist und welches eine für diesen Zweck ausgebildete Schneidkante (14) aufweist, und welche durch eine Öffnung (15) in der ersten Führungshülle (1, 3) Zugang zu dem zu schneidenden Stahlkabel (2) hat, wobei die Kanten der Öffnung als Wiederlager und Abscherkanten für die Schneidkante (14) des Werkzeugs dienen, wobei das Schneidwerkzeug mit einer ferngesteuerten Treibladung (8) ausgebildet ist, die hinter dem Schneidwerkzeug angeordnet ist.

4. Vorrichtung nach Anspruch 3,
zum Schneiden eines Kabels (D), eines sog. Zaums, das beim Schleppnetzfischen die Schleppnetzwinden (B, C) entlastet, die während des Schleppnetzfischens normalerweise in neutrale Stellung gebracht werden, indem zwei Schleppnetzkabel (H, J) von den Winden an dem Zaum (D) durch eine Schließvorrichtung (K) befestigt sind, in der der Zaum eingelagert ist und die sofort freigegeben wird, wenn der Zaum (D) infolge des Durchschneidens aus der Schließvorrichtung herausläuft.

5. Vorrichtung nach Anspruch 4,
bei der eine Schneidvorrichtung eine bogenförmige, scharf geschliffene Schneidkante (14) rechtwinklig zu dem Stahlkabel des Zaums aufweist, während die Öffnung (15) in der ersten Führungshülse so ausgebildet ist, daß die Schneidkante (14) mit ausreichender Reserve durch das gesamte Stahlkabel schneiden kann.

6. Vorrichtung nach den Ansprüchen 3 bis 5,
bei der das Schneidwerkzeug zwischen der Schneidkante (14) und der Treibladung (8) ein Kolbenabschnitt (12) mit größerem Durchmesser als die Schneidkante aufweist, wobei die Schneidkante (14) bogenförmig ist, aber keinen vollständigen Kreis bildet, und wobei die Öffnung (15) für die Schneidkante in der ersten Führungshülse (1, 3) so ausgebildet ist, daß sie garantiert, daß sich das Schneidwerkzeug nicht verdreht, so daß gewährleistet ist, daß die Schneidkante (14) immer rechtwinklig zu dem Stahlkabel (2) des Zaums ist.

7. Vorrichtung nach Anspruch 3 bis 6,
wobei die erste Führungshülse (1, 3) mittels eines Scharniers (11) geöffnet werden kann, so daß sie leicht über das Stahlkabel (2) des Zaums eingehakt werden kann, wonach die Teile der Führungshülse miteinander verriegelt werden können, wobei sich das Kabel (2) zwischen ihnen befindet.

## Revendications

1. Procédé qui doit être utilisé pour la pêche au chalut avec un chalut à moteur afin d'empêcher le chalutier d'être entraîné vers le fond par un chalut surchargé ou accroché à un obstacle au fond de l'eau, par lequel le chalut est dégagé en coupant au moyen d'un dispositif de coupe totalement encapsulé, à gaz propulseur, contrôlé à distance (G, 1-16), au moins un câble en acier qui relie le chalut au chalutier sans entraîner l'ouverture du chalut.

2. Procédé selon la revendication 1, qui doit être utilisé pour la pêche au chalut avec un chalut à moteur (A) afin d'empêcher le chalut qui est accroché à un obstacle au fond de l'eau d'entraîner le chalutier vers le fond, par lequel un câble arrêtoir (D) dont les extrémités (E, F) sont fixées à chacun des côtés de la poupe du chalutier (A) et qui, au cours de la pêche au chalut, soulage les treuils du chalut (B, C) utilisés pour exploiter le chalut et qui au cours de cette opération sont en position neutre alors que les câbles de chalut sortants (J, H) des treuils (B, C) vers le chalut sont fixés à l'arrêtoir (D) au moyen d'un dispositif de blocage (K) qui en cas de rupture d'un point de fixation unique (E ou F) de l'arrêtoir (D) et de sortie de l'arrêtoir du chalut, est immédiatement dégagé du chalutier au moyen d'un dispositif de coupe totalement encapsulé (G, 1-15), à gaz propulseur, de préférence activé à partir du pont du chalutier, le dispositif de coupe étant activé sur un point de fixation (E ou F) de l'arrêtoir (D) de manière à ce que l'arrêtoir (D) soit coupé audit point de fixation (E ou F) et à ce que l'arrêtoir (D) puisse immédiatement sortir dudit dispositif de blocage (K).

3. Dispositif d'utilisation pour la pêche au chalut en utilisant un chalutier à moteur selon le procédé des revendications 1 et 2, de manière à empêcher un chalut surchargé ou soudainement pris dans un obstacle au fond de l'eau d'entraîner la perte du chalutier (A) en étant entraîné vers le fond par le chalut, en coupant le câble qui relie le chalut au chalutier en utilisant un dispositif activé de préférence à partir du pont du chalutier, dans lequel ledit dispositif intègre un premier manchon de guidage (1, 3) qui contient l'emplacement sur le câble en acier (2) où la coupe doit avoir lieu avec les parties du câble directement adjacentes, et à angle droit du premier manchon de guidage (1, 3), un second manchon de guidage (5) dans lequel un outil de coupe à gaz propulseur (4) est placé de façon réglable, et qui a un bord de coupe (14) conçu à cet effet qui peut accéder au câble en acier (2) qui doit être coupé par une ouverture (15) dans le premier manchon de guidage (1, 3) sur lequel les bords de l'ouverture servent de contre-support et de bord de cisaillement pour le bord de l'outil de coupe (14), l'outil de coupe étant conçu avec une charge de propulsion contrôlée à distance (8) placée derrière ledit outil de coupe.

4. Dispositif selon la revendication 3, qui est conçu pour couper un câble (D), un soi-disant arrêtoir, qui au cours de la pêche au chalut allège la charge sur les treuils du chalut (B, C) qui sont généralement en position neutre quand le chalut est sorti de l'eau, au moyen de deux câbles de chalut (H, J) à partir des treuils fixés à l'arrêtoir (D) par un dispositif de blocage (K) dans lequel l'arrêtoir est intégré et qui est immédiatement libéré si l'arrêtoir (D) sort du dispositif de blocage après avoir été coupé.

5. Dispositif selon la revendication 4, dans lequel le dispositif de coupe a un bord de coupe (14) en forme d'arc et finement aiguisé, à angle droit du câble en acier d'arrêtoir, alors que l'ouverture (15) dans le premier manchon de guidage est conçue de manière à ce que le bord de coupe (14) puisse couper la totalité du câble avec une bonne marge.

6. Dispositif selon les revendications 3-5, dans lequel l'outil de coupe entre le bord de coupe (14) et la charge de gaz propulseur (8) a une section de piston (12) dont le diamètre est plus grand que le bord de coupe, et dans lequel le bord de coupe (14) est en forme d'arc mais ne forme pas un cercle complet, et dans lequel l'ouverture (15) pour le bord de coupe dans le premier manchon de guidage (1, 3) est conçue de façon à garantir que l'outil de coupe ne pivote pas, assurant ainsi que le bord de coupe (14) est toujours à angle droit du câble en acier (2) de l'arrêtoir.

7. Dispositif selon les revendications 3-6, dans lequel le premier manchon de guidage (1, 3) peut être ouvert au moyen d'une charnière (11) de manière à ce qu'il puisse être facilement accroché sur le câble en acier de l'arrêtoir (2) sur lequel les parties du manchon de guidage peuvent être bloquées ensemble avec le câble (2) maintenu entre elles.
